# EUROPÄISCHE PATENTSCHRIFT

(11) **EP 2 812 989 B1**
(45) Veröffentlichungstag und Bekanntmachung des Hinweises auf die Patenterteilung: **07.08.2019**
(21) Anmeldenummer: 13706169.3
(22) Anmeldetag: 28.01.2013
(51) Int. Cl.: H02M 5/458, H02J 7/34, H02P 27/06, H02H 9/04

(54) **ANTRIEBSSYSTEM MIT ENERGIESPEICHER UND VERFAHREN ZUM BETREIBEN EINES ANTRIEBSSYSTEMS**
DRIVE SYSTEM WITH ENERGY ACCUMULATOR AND METHOD FOR OPERATING A DRIVE SYSTEM
SYSTÈME D'ENTRAÎNEMENT DOTÉ D'UN ACCUMULATEUR D'ÉNERGIE ET PROCÉDÉ DE FONCTIONNEMENT D'UN SYSTÈME D'ENTRAÎNEMENT

(30) Priorität: 06.02.2012 DE 102012002089
(43) Veröffentlichungstag der Anmeldung: 17.12.2014
(73) Patentinhaber: SEW-EURODRIVE GmbH & Co. KG, 76646 Bruchsal (DE)
(72) Erfinder: SCHIFFMANN, Sebastian, 76709 Kronau (DE); SCHMIDT, Josef, 76676 Graben-Neudorf (DE); HAUCK, Matthias, 68723 Schwetzingen (DE); LAMPERT, Christian, 76646 Bruchsal (DE); TRITSCHLER, Daniel, 76646 Bruchsal (DE); ZÖLLER, Thomas, 76646 Bruchsal (DE)
(74) Vertreter: Tüngler, Eberhard
(86) Internationale Anmeldenummer: PCT/EP2013/000237
(87) Internationale Veröffentlichungsnummer: WO 2013/117304

(56) Entgegenhaltungen:
- DE-A1- 10 101 988
- DE-A1-102005 042 321
- DE-A1-102009 031 257
- US-A- 5 734 258

## Beschreibung

Die Erfindung betrifft ein Antriebssystem mit Energiespeicher und ein Verfahren zum Betreiben eines Antriebssystems.

Es ist allgemein bekannt, dass ein Antriebssystem aus einem wechselrichtergespeisten Elektromotor besteht, wobei der Wechselrichter aus einem gleichrichtergespeisten Zwischenkreis versorgt ist. Ein Kondensator puffert die Zwischenkreisspannung ab.

Unter Wechselrichter und wechselrichtergespeisten Vorrichtungen wird in dieser Schrift auch Stromrichter beziehungsweise stromrichtergespeiste Vorrichtungen verstanden.

Aus der DE 10 2005 042 321 A1 ist ein Weitspannungsumrichter bekannt.

Aus der DE 10 2009 031 257 A1 ist ein Verfahren zum Betreiben einer Anlage mit Umrichter bekannt.

Aus der US 5 734 258 A ist ein bidirektionaler Umrichter bekannt.

Aus der DE 101 01 988 A1 ist ein Verfahren zum Schutz mindestens eines Verbrauchers vor Überspannungen bekannt.

Der Erfindung liegt daher die Aufgabe zugrunde, Energieverbrauch eines Antriebssystems zu reduzieren.

Erfindungsgemäß wird die Aufgabe bei dem Antriebssystem nach den in Anspruch 1 und bei dem Verfahren nach den in Anspruch 8 angegebenen Merkmalen gelöst.

Wichtige Merkmale der Erfindung bei dem Antriebssystem mit Energiespeicher sind, dass ein Wechselrichter einen Elektromotor speist,
wobei der Wechselrichter aus einer unipolaren Zwischenkreisspannung versorgt wird,
wobei ein Energiespeicher dem Wechselrichter parallel zugeschaltet ist,
insbesondere wobei ein Folienkondensator dem Wechselrichter parallel zugeschaltet ist,
wobei die Zwischenkreisspannung von einem DC/DC-Wandler erzeugt wird, der aus einem AC/DC-Wandler, insbesondere Gleichrichter, versorgt wird,
insbesondere wobei vom DC/DC-Wandler ein elektrischer Strom dem Zwischenkreis zuführbar ist.

Ein Energiespeicher ist also parallel zum Zwischenkreis angeschlossen.

Von Vorteil ist dabei, dass der Antrieb nach Art eines spannungsgeführten Zwischenkreisumrichters und/oder eines selbstgeführten Umrichters mit Spannungszwischenkreis betreibbar ist. Weiter vorteilig ist, dass der vom Gleichrichter aus benötigte Energiefluss steuerbar ist und somit die Leistung begrenzbar ist auf einen Grenzwert, insbesondere einen vom Zustand des Antriebs abhängigen Grenzwert. Außerdem ist ein Folienkondensator im Zwischenkreis einsetzbar, so dass hochfrequente Ströme abpufferbar sind.

Weiter von Vorteil ist bei der Erfindung, dass der Energieverbrauch, die Netzrückwirkung und die Anschlussleistung reduziert ist. Es ist sogar ein Netzrückspeisegerät und/oder ein im Zwischenkreis angeordneter Bremswiderstand verzichtbar, da eine zu hohe Zwischenkreisspannung im Normalbetrieb durch den Energiespeicher bewirkbar ist.

Bei einer vorteilhaften Ausgestaltung wird der Gleichrichter aus einer ein-, drei- oder mehrphasigen Wechselstromquelle gespeist oder aus einer Sekundärwicklung, die induktiv an einen Primärleiter gekoppelt ist, insbesondere welcher mit einem Wechselstrom beaufschlagt ist. Von Vorteil ist dabei, dass die vom DC/DC-Wandler dem Zwischenkreis zugeführte Energie aus einem Wechselstromnetz, also fest installiertem Netz, oder aus einer induktiven Übertragung stammt. Somit ist das Antriebssystem auch auf einem bewegten Teil einer Anlage anordenbar, wenn in der Anlage ein Primärleiter stationär verlegt ist.

Bei einer vorteilhaften Ausgestaltung weist der Energiespeicher zumindest einen Doppelschichtkondensator und/oder zumindest einen Akkumulator auf. Von Vorteil ist dabei, dass eine hohe Energie-Kapazität im Zwischenkreis vorsehbar ist.

Es ist ein Mittel zur Erfassung der Zwischenkreisspannung mit einem Vergleichsmittel verbunden, wobei das Vergleichsmittel mit dem DC/DC-Wandler verbunden ist, und der DC/DC-Wandler einen derartigen Strom in den Zwischenkreis steuert, dass die in den Zwischenkreis einspeiste Leistung auf einen Sollwert hin geregelt wird,
wobei das Vergleichsmittel die erfasste Zwischenkreisspannung zumindest mit einem kritischen Wert (U0, U1 und/oder U2) vergleicht. Von Vorteil ist dabei, dass spannungsabhängig ein Strom in den Zwischenkreis einspeisbar ist.

Bei einer vorteilhaften Ausgestaltung ist eine Reihenschaltung aus einem Schalter und einem Widerstand dem Wechselrichter, dem Zwischenkreis und/oder dem Energiespeicher parallel zugeschaltet. Von Vorteil ist dabei, dass bei kritisch hoher Spannung im Zwischenkreis, also bei Überschreiten des zweiten Wertes, ein Abführen von Energie aus dem Zwischenkreis ermöglicht ist.

Bei einer vorteilhaften Ausgestaltung wird der Sollwert von einer übergeordneten Steuerung vorgegeben,
insbesondere wobei die Steuerung den Sollwert aus dem geplanten Steuerungsablauf prädiktiv bestimmt. Von Vorteil ist dabei, dass der Sollwert anpassbar ist an die jeweiligen Zustände oder Abläufe.

Bei einer vorteilhaften Ausgestaltung ist die vom DC/DC-Wandler in den Zwischenkreis einspeisbare Leistung auf einen Grenzwert begrenzt,
wobei der Grenzwert größer als die Leistung, insbesondere zeitlich gemittelte Leistung, des Antriebs ist und/oder wobei der Grenzwert kleiner als die Spitzenleistung des Antriebs ist, insbesondere wobei die Leistung vom Betriebszustand des Antriebs abhängig ist. Von Vorteil ist dabei, dass Energie möglichst sparsam verwendet wird.

Wichtige Merkmale bei dem Verfahren sind, dass es zum Betreiben eines Antriebssystems, wobei der Wechselrichter eines Antriebs aus einem Zwischenkreis gespeist wird, der von einem DC/DC-Wandler speisbar ist, welcher aus einem AC/DC-Wandler, insbesondere Gleichrichter, versorgbar ist,
wobei der Wechselrichter des Antriebs mit einer Steuerung verbunden ist,
welche zur Signalübertragung mit dem DC/DC-Wandler und dem Wechselrichter verbunden ist, insbesondere direkt oder indirekt,
so dass der DC/DC-Wandler die von der Steuerung vorgegebene elektrische Leistung dem Zwischenkreis zuführt.

Von Vorteil ist dabei, dass eine vorgebbare Leistung vom DC/DC-Wandler dem Zwischenkreis zuführbar ist.

Gemäß der Erfindung wird die Zwischenkreisspannung erfasst und bei Unterschreiten eines ersten Werts vom DC/DC-Wandler eine elektrische Leistung in den Zwischenkreis eingespeist. Von Vorteil ist dabei, dass die Einspeisung in den Zwischenkreis abhängig von der dortigen Spannung ausführbar ist.

Weiterhin wird gemäß der Erfindung die Zwischenkreisspannung erfasst und bei Überschreiten eines zweiten Werts Energie aus dem Zwischenkreis einem Widerstand zur Umwandlung in Ohmsche Wärme zugeführt oder einem Netzrückspeisegerät zur Rückspeisung der Energie in ein Wechselstromnetz. Von Vorteil ist dabei, dass die Sicherheit erhöht ist, indem keine kritisch hohen Spannungswerte erreichbar sind. Allerdings ist ein Netzrückspeisegerät bei geeigneter Dimensionierung des Energiespeichers nicht notwendig.

Bei einer vorteilhaften Ausgestaltung ist der zweite Wert größer als der erste Wert. Von Vorteil ist dabei, dass eine einfache Realisierung ausführbar ist.

Weiterhin wird gemäß der Erfindung die Zwischenkreisspannung erfasst und es wird bei Unterschreiten des zweiten und Überschreiten des ersten Werts vom DC/DC-Wandler keine elektrische Leistung in den Zwischenkreis eingespeist. Von Vorteil ist dabei, dass Energie einsparbar ist.

Bei einer vorteilhaften Ausgestaltung wird beim Vergleich der erfassten Zwischenkreisspannung mit dem ersten und/oder zweiten Wert eine Hysterese berücksichtigt. Von Vorteil ist dabei, dass die Schwingneigung verringert wird.

Bei einer vorteilhaften Ausgestaltung ist die maximal zulässige vom DC/DC-Wandler in den Zwischenkreis einspeisbare und/oder eingespeiste Leistung größer als die aus dem Zwischenkreis vom Antrieb entnehmbare und/oder entnommene mittlere Leistung, insbesondere kleiner als die Spitzenleistung des Antriebes und/oder größer als die mittlere Leistung des Antriebes,
insbesondere wobei der Energiespeicher ausreichend groß dimensioniert ist. Von Vorteil ist dabei, dass ein Mindestniveau der Zwischenkreisspannung gesichert ist.

Bei einer vorteilhaften Ausgestaltung gibt die Steuerung den Wert für die maximal zulässige vom DC/DC-Wandler in den Zwischenkreis einspeisbare und/oder eingespeiste Leistung abhängig vom Zustand des Antriebs dem DC/DC-Wandler vor. Von Vorteil ist dabei, dass eine Anpassung an eine jeweils sich verändernde und/oder die jeweils aktuelle Situation ermöglicht ist. Dabei ist einen übergeordnete Steuerung vorteilhaft verwendbar, da diese den Bewegungsablauf steuert.

Weitere Vorteile ergeben sich aus den Unteransprüchen. Die Erfindung ist einzig durch die Ansprüche definiert. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

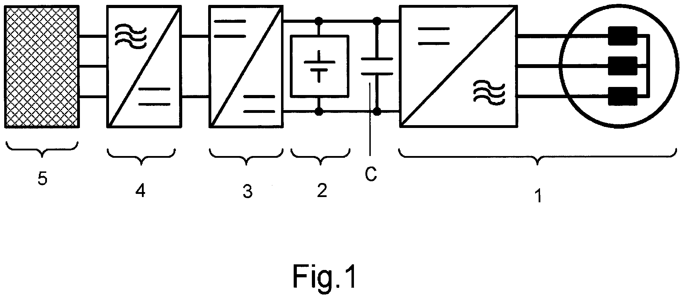

In der Figur 1 ist ein schematischer Aufbau eines erfindungsgemäßen Antriebssystems gezeigt.

Dabei ist ein Antrieb 1 vorgesehen, der einen Wechselrichter, also DC/AC-Wandler, mit daraus gespeistem Elektromotor aufweist.

Der Wechselrichter des Antriebs 1 wird versorgt aus einem Zwischenkreis mit unipolarer Spannung, wobei zur Glättung ein Zwischenkreiskondensator C im Zwischenkreis angeordnet ist. Dieser Zwischenkreiskondensator ist gemäß der Erfindung als Folienkondensator ausgeführt. Die Kapazität des Folienkondensators ist nur derart groß, dass bei maximal zugelassener motorischer Leistung des Antriebs die Energiemenge für einen Betrieb von weniger als einer Netzperiode, beispielsweise 20 ms, im Zwischenkreiskondensator C speicherbar ist.

Außerdem ist ein Energiespeicher 2 mit großer Kapazität im Zwischenkreis angeordnet, der vorzugsweise aus Doppelschichtkondensatoren gebildet ist. Zum Schutz der Doppelschichtkondensatoren sind im Energiespeicher ein Strombegrenzungsmittel und gegebenenfalls auch ein Verpolungsschutz und Überspannungsschutz angeordnet.

Der DC/DC-Wandler 3 steuert den Energiefluss in den Zwischenkreis aus dem den DC/DC-Wandler 3 versorgenden AC/DC-Wandler 4, insbesondere Gleichrichter, welcher wiederum aus dem Netz 5 versorgt ist.

Der DC/DC-Wandler 3 beeinflusst die Spannung, indem er einen entsprechenden elektrischen Leistungsfluss in den Zwischenkreis zuführt. Zusätzlich ist die Zwischenkreisspannung beeinflusst von dem vom Antrieb motorisch entnommenen oder generatorisch zugeführtem Leistungsfluss.

Die Zwischenkreisspannung ist je nach Betriebspunkt des Antriebssystems sogar höher als diejenige Spannung, welche sich ohne den DC/DC-Wandler 3 einstellen würde. Die mittlere Zwischenkreisspannung ist durch den DC/DC-Wandler in einem großen Bereich frei wählbar.

Dies ist unabhängig vom Netzanschluss samt dessen Spannung, Phasenanzahl, Frequenz und/oder Qualität.

Das Antriebssystem ist auf verschiedene Weisen betreibbar.

In einer ersten Variante wird von einer Steuerung, beispielsweise übergeordneten Steuerung und/oder den Wechselrichter ansteuernden Steuerung, dem DC/DC-Wandler 3 der in den Zwischenkreis einzuspeisende Soll-Leistungsfluss vorgegebenen. Die Steuerung steuert den zeitlichen Bewegungsablauf, also die Abfolge der Betriebspunkte des Antriebs, und ist somit auch in der Lage, einen aus dem prognostizierten Bedarf ermittelten Soll-Leistungsfluss dem DC/DC-Wandler 3 vorzugeben. Im einfachsten Fall ist der Soll-Leistungsfluss ein konstanter Wert.

In einer zweiten Variante wird die Zwischenkreisspannung U erfasst und mit einem ersten kritischen Wert U1 verglichen. Solange die Zwischenkreisspannung U kleiner als U1 ist, wird vom DC/DC-Wandler 3 vom Netz 5 gelieferter, über den AC/DC-Wandler gleichgerichteter Strom dem Zwischenkreis zugeführt. Die zugehörige Leistung ist dabei auf einen maximal zulässigen Wert P_krit begrenzt.

Sobald die Zwischenkreisspannung U größer ist als U1 ist, wird vom DC/DC-Wandler 3 keine Leistung dem Zwischenkreis zugeführt.

Sobald die Zwischenkreisspannung U größer ist als ein zweiter kritischer Wert U2, wird mittels eines dann zugeschalteten Widerstandes, insbesondere Bremswiderstandes, ein Leistungsstrom aus dem Zwischenkreis in einen Wärmestrom gewandelt, der an die Umgebung des Widerstands abgeführt wird. Hierzu ist also der Widerstand über einen steuerbaren Schalter aus dem Zwischenkreis versorgbar.

Die Leistungsbegrenzung des DC/DC-Wandlers 3 ist in jedem Fall größer als die mittlere Antriebsleistung des Antriebs. Der Energiespeicher muss ausreichend dimensioniert sein.

Bei den genannten Vergleichen sind vorzugsweise Hysteresen berücksichtigt. Somit sind Schwingungen im Betriebszustand unterdrückbar.

Bei einem weiteren erfindungsgemäßen Ausführungsbeispiel ist statt des netzversorgten AC/DC-Wandlers 4 ein einphasiger Gleichrichter eingesetzt, welcher aus einer Sekundärwicklung versorgt ist, welche induktiv an einen Primärleiter, der langgestreckt verlegt ist oder als Ringwicklung ausgeführt ist, gekoppelt ist. Somit ist Energie induktiv vom Primärleiter an die Sekundärwicklung übertragbar. Die Sekundärwicklung versorgt dabei den DC/DC-Wandler 3, aus dem wiederum der Antrieb 1 versorgt wird, wobei ein Energiespeicher 2 verwendet wird.

### Bezugszeichenliste

- 1: Antrieb, umfassend Wechselrichter mit daraus gespeistem Elektromotor
- 2: Energiespeicher
- 3: DC/DC-Wandler
- 4: AC/DC-Wandler, insbesondere Gleichrichter
- 5: Netzversorgung

- C: Zwischenkreiskondensator

## Patentansprüche

1. Antriebssystem mit Energiespeicher (2),
wobei ein Wechselrichter einen Elektromotor speist,
wobei der Wechselrichter mit einem Zwischenkreis verbunden ist und aus einer unipolaren Zwischenkreisspannung versorgt wird,
wobei ein Energiespeicher (2) dem Wechselrichter parallel zugeschaltet ist,
wobei ein Folienkondensator dem Wechselrichter parallel zugeschaltet ist,
wobei die Zwischenkreisspannung von einem DC/DC-Wandler (3) erzeugt wird, der aus einem AC/DC-Wandler (4), insbesondere Gleichrichter, versorgt wird,
wobei dem Zwischenkreis vom DC/DC-Wandler (3) ein elektrischer Strom zuführbar ist, wobei eine Reihenschaltung aus einem Schalter und einem Widerstand dem Zwischenkreis und/oder dem Wechselrichter parallel zugeschaltet ist,
wobei ein Mittel zur Erfassung der Zwischenkreisspannung mit einem Vergleichsmittel verbunden ist,
wobei das Vergleichsmittel mit dem DC/DC-Wandler (3) verbunden ist, und das Antriebssystem so eingerichtet ist, dass der DC/DC-Wandler (3) dem Zwischenkreis einen derartigen Strom zuführt, dass die in den Zwischenkreis einspeiste Leistung auf einen Sollwert hin geregelt wird,
wobei das Vergleichsmittel eingerichtet ist, die erfasste Zwischenkreisspannung mit zumindest einem kritischen Wert (U0, U1 oder U2) zu vergleichten,
wobei das Antriebssystem so eingerichtet ist, dass die Zwischenkreisspannung erfasst wird und
∘ bei Unterschreiten eines ersten Werts vom DC/DC-Wandler (3) eine elektrische Leistung in den Zwischenkreis eingespeist wird, sowie
∘ bei Überschreiten eines zweiten Werts Energie aus dem Zwischenkreis einem Widerstand zur Umwandlung in Ohm'sche Wärme zugeführt wird oder einem Netzrückspeisegerät zur Rückspeisung der Energie in ein Wechselstromnetz, sowie
∘ bei Unterschreiten des zweiten und Überschreiten des ersten Werts vom DC/DC-Wandler (3) keine elektrische Leistung in den Zwischenkreis eingespeist wird.

2. Antriebssystem nach Anspruch 1,
**dadurch gekennzeichnet, dass**
der Gleichrichter aus einer ein-, drei- oder mehrphasigen Wechselstromquelle gespeist wird oder aus einer Sekundärwicklung, die induktiv an einen Primärleiter gekoppelt ist, insbesondere welcher mit einem Wechselstrom beaufschlagt ist.

3. Antriebssystem nach Anspruch 1 oder 2,
**dadurch gekennzeichnet, dass**
der Energiespeicher (2) zumindest einen Doppelschichtkondensator und/oder zumindest einen Akkumulator aufweist.

4. Antriebssystem nach einem der Ansprüche 1 bis 3,
**dadurch gekennzeichnet, dass**
der Sollwert von einer übergeordneten Steuerung vorgegeben wird,
wobei der Sollwert von der Steuerung aus dem geplanten Steuerungsablauf prädiktiv bestimmt ist.

5. Antriebssystem nach einem der Ansprüche 1 bis 4,
**dadurch gekennzeichnet, dass**
die vom DC/DC-Wandler (3) in den Zwischenkreis einspeisbare Leistung auf einen Grenzwert begrenzt ist,
wobei der Grenzwert größer als die zeitlich gemittelte Leistung des Antriebs ist und wobei der Grenzwert kleiner als die Spitzenleistung des Antriebs ist, wobei die Leistung vom Betriebszustand des Antriebs abhängig ist.

6. Verfahren zum Betreiben eines Antriebssystems, insbesondere nach mindestens einem der vorangegangenen Ansprüche,
wobei der Wechselrichter eines Antriebs aus einem Zwischenkreis gespeist wird, der von einem DC/DC-Wandler (3) gespeist wird, welcher aus einem AC/DC-Wandler (4), insbesondere Gleichrichter, versorgt wird,
wobei der Wechselrichter des Antriebs mit einer Steuerung verbunden ist, welche zur Signalübertragung mit dem DC/DC-Wandler (3) und dem Wechselrichter verbunden ist, insbesondere direkt oder indirekt,
so dass der DC/DC-Wandler (3) eine von der Steuerung vorgegebene elektrische Leistung dem Zwischenkreis zuführt,
wobei vom DC/DC-Wandler (3) dem Zwischenkreis ein derartiger Strom zugeführt wird, dass die in den Zwischenkreis einspeiste Leistung auf einen Sollwert hin geregelt wird,
wobei die Zwischenkreisspannung erfasst wird und
∘ mit zumindest einem kritischen Wert (U0, U1 oder U2) verglichen wird,
∘ bei Unterschreiten eines ersten Werts vom DC/DC-Wandler (3) eine elektrische Leistung in den Zwischenkreis eingespeist wird, sowie
∘ bei Überschreiten eines zweiten Werts Energie aus dem Zwischenkreis einem Widerstand zur Umwandlung in Ohm'sche Wärme zugeführt wird oder einem Netzrückspeisegerät zur Rückspeisung der Energie in ein Wechselstromnetz,
∘ bei Unterschreiten des zweiten und Überschreiten des ersten Werts vom DC/DC-Wandler (3) keine elektrische Leistung in den Zwischenkreis eingespeist wird.

7. Verfahren nach Anspruch 6,
**dadurch gekennzeichnet, dass**
der zweite Wert größer ist als der erste Wert.

8. Verfahren nach Anspruch 6 oder 7,
**dadurch gekennzeichnet, dass**
der Sollwert von einer übergeordneten Steuerung vorgegeben wird,
wobei der Sollwert von der Steuerung aus dem geplanten Steuerungsablauf prädiktiv bestimmt wird.

9. Verfahren nach einem der Ansprüche 6 bis 8,
**dadurch gekennzeichnet, dass**
beim Vergleich der erfassten Zwischenkreisspannung mit dem ersten und/oder zweiten Wert eine Hysterese berücksichtigt wird.

10. Verfahren nach einem der Ansprüche 6 bis 9,
**dadurch gekennzeichnet, dass**
die maximal zulässige vom DC/DC-Wandler (3) in den Zwischenkreis einspeisbare und/oder eingespeiste Leistung größer ist als die aus dem Zwischenkreis vom Antrieb entnehmbare und/oder entnommene mittlere Leistung
und/oder dass
die maximal zulässige vom DC/DC-Wandler (3) in den Zwischenkreis einspeisbare und/oder eingespeiste Leistung kleiner als die Spitzenleistung,
insbesondere wobei der Energiespeicher (2) ausreichend groß dimensioniert ist.

11. Verfahren nach einem der Ansprüche 6 bis 10,
**dadurch gekennzeichnet, dass**
die Steuerung den Wert für die maximal zulässige vom DC/DC-Wandler (3) in den Zwischenkreis einspeisbare und/oder eingespeiste Leistung abhängig vom Zustand des Antriebs dem DC/DC-Wandler (3) vorgibt.

## Claims

1. Drive system having an energy store (2),
wherein an inverter feeds an electric motor,
wherein the inverter is connected to a DC link and is supplied from a unipolar DC link voltage,
wherein an energy store (2) is connected in parallel with the inverter,
wherein a film capacitor is connected in parallel with the inverter,
wherein the DC link voltage is generated by a DC/DC converter (3) which is supplied from an AC/DC converter (4), in particular a rectifier,
wherein an electric current can be supplied to the DC link from the DC/DC converter (3),
wherein a series circuit consisting of a switch and a resistor is connected in parallel with the DC link and/or with the inverter,
wherein a means for detecting the DC link voltage is connected to a comparison means,
wherein the comparison means is connected to the DC/DC converter (3), and the drive system is configured such that the DC/DC converter (3) supplies such a current to the DC link that the power fed into the DC link is regulated to a setpoint value,
wherein the comparison means is configured to compare the detected DC link voltage to at least one critical value (U0, U1 or U2),
wherein the drive system is configured such that the DC link voltage is detected and
∘ if a first value is not reached, an electric power is fed into the DC link by the DC/DC converter (3), and
∘ if a second value is exceeded, energy from the DC link is supplied to a resistor for conversion into ohmic heat or is supplied to a network return device for returning the energy to an AC power network, and
∘ if the first value is exceeded but the second value is not reached, no electric power is fed into the DC link by the DC/DC converter (3).

2. Drive system according to claim 1,
**characterized in that**
the rectifier is fed from a single-phase, three-phase or multiphase AC source or from a secondary winding which is inductively coupled to a primary conductor, in particular to which an AC current is applied.

3. Drive system according to claim 1 or 2,
**characterized in that**
the energy store (2) comprises at least one double-layer capacitor and/or at least one accumulator.

4. Drive system according to one of claims 1 to 3,
**characterized in that**
the setpoint value is predefined by a higher-level controller, wherein the setpoint value is predictively determined by the controller from the planned control sequence.

5. Drive system according to one of claims 1 to 4,
**characterized in that**
the power that can be fed into the DC link by the DC/DC converter (3) is limited to a limit value,
wherein the limit value is greater than the time-averaged power of the drive, and wherein the limit value is less than the peak power of the drive, wherein the power is dependent on the operating state of the drive.

6. Method for operating a drive system, in particular according to at least one of the preceding claims,
wherein the inverter of a drive is fed from a DC link, which is fed from a DC/DC converter (3), which is supplied from an AC/DC converter (4), in particular a rectifier,
wherein the inverter of the drive is connected to a controller which for signal transmission purposes is connected, in particular directly or indirectly, to the DC/DC converter (3) and the inverter,
so that the DC/DC converter (3) supplies the DC link with an electric power that is predefined by the controller,
wherein the DC link is supplied by the DC/DC converter (3) with such a current that the power fed into the DC link is regulated to a setpoint value,
wherein the DC link voltage is detected and
∘ is compared to at least one critical value (U0, U1 or U2),
∘ if a first value is not reached, an electric power is fed into the DC link by the DC/DC converter (3), and
∘ if a second value is exceeded, energy from the DC link is supplied to a resistor for conversion into ohmic heat or is supplied to a network return device for returning the energy to an AC power network,
∘ if the first value is exceeded but the second value is not reached, no electric power is fed into the DC link by the DC/DC converter (3).

7. Method according to claim 6,
**characterized in that**
the second value is greater than the first value.

8. Method according to claim 6 or 7,
**characterized in that**
the setpoint value is predefined by a higher-level controller, wherein the setpoint value is predictively determined by the controller from the planned control sequence.

9. Method according to one of claims 6 to 8,
**characterized in that**
a hysteresis is taken into account when comparing the detected DC link voltage to the first and/or second value.

10. Method according to one of claims 6 to 9,
**characterized in that**
the maximum permissible power that can be and/or is fed into the DC link by the DC/DC converter (3) is greater than the average power that can be and/or is taken from the DC link by the drive,
and/or **in that**
the maximum permissible power that can be and/or is fed into the DC link by the DC/DC converter (3) is less than the peak power,
in particular wherein the energy store (2) is of sufficiently large dimensions.

11. Method according to one of claims 6 to 10,
**characterized in that**
the controller predefines, for the DC/DC converter (3), the value for the maximum permissible power that can be and/or is fed into the DC link by the DC/DC converter (3) depending on the state of the drive.

## Revendications

1. Système d'entraînement doté d'un élément (2) de stockage d'énergie,
dans lequel un onduleur alimente un moteur électrique,
lequel onduleur est raccordé à un circuit intermédiaire, et est alimenté sur la base d'une tension de circuit intermédiaire unipolaire,
un élément (2) de stockage d'énergie étant connecté en parallèle avec l'onduleur,
un condensateur à film étant connecté en parallèle avec ledit onduleur,
la tension de circuit intermédiaire étant engendrée par un convertisseur (3) courant continu/courant continu alimenté à partir d'un convertisseur (4) courant alternatif/courant continu, en particulier d'un redresseur,
ledit convertisseur (3) courant continu/courant continu pouvant délivrer un courant électrique au circuit intermédiaire,
un branchement en série, constitué d'un commutateur et d'une résistance, étant connecté en parallèle avec ledit circuit intermédiaire et/ou avec ledit onduleur,
un moyen de détection de la tension de circuit intermédiaire étant raccordé à un moyen comparateur,
sachant que ledit moyen comparateur est raccordé au convertisseur (3) courant continu/courant continu, et que le système d'entraînement est agencé de façon telle que ledit convertisseur (3) courant continu/courant continu délivre, au circuit intermédiaire, un courant par la nature duquel la puissance, injectée dans ledit circuit intermédiaire, est régulée sur une valeur de consigne,
ledit moyen comparateur étant agencé pour comparer la tension de circuit intermédiaire détectée à au moins une valeur critique (U0, U1 ou U2),
ledit système d'entraînement étant agencé de telle sorte que ladite tension de circuit intermédiaire soit détectée et que,
∘ lors d'un dépassement négatif d'une première valeur, une puissance électrique soit injectée dans le circuit intermédiaire par le convertisseur (3) courant continu/courant continu, de même que,
∘ lors d'un dépassement positif d'une seconde valeur, de l'énergie soit délivrée, à partir dudit circuit intermédiaire, à une résistance en vue de la conversion en chaleur ohmique, ou à un appareil d'alimentation régénérative de réseau, en vue de renvoyer l'énergie dans un réseau de courant alternatif, de même que,
∘ lors d'un dépassement négatif de ladite seconde valeur et d'un dépassement positif de ladite première valeur, aucune puissance électrique ne soit injectée dans ledit circuit intermédiaire par ledit convertisseur (3) courant continu/courant continu.

2. Système d'entraînement selon la revendication 1,
**caractérisé par le fait que**
le redresseur est alimenté à partir d'une source de courant alternatif monophasé, triphasé ou multiphasé, ou à partir d'un enroulement secondaire couplé inductivement à un conducteur primaire,
lequel est notamment sollicité par un courant alternatif.

3. Système d'entraînement selon la revendication 1 ou 2,
**caractérisé par le fait que**
l'élément (2) de stockage d'énergie est muni d'au moins un condensateur à double couche, et/ou d'au moins un accumulateur.

4. Système d'entraînement selon l'une des revendications 1 à 3,
**caractérisé par le fait que**
la valeur de consigne est préétablie par une commande de niveau supérieur,
laquelle valeur de consigne est déterminée en mode prédictif, par ladite commande, sur la base du déroulement planifié de la commande.

5. Système d'entraînement selon l'une des revendications 1 à 4,
**caractérisé par le fait que**
la puissance, pouvant être injectée dans le circuit intermédiaire par le convertisseur (3) courant continu/courant continu, est cantonnée à une valeur limite,
sachant que la valeur limite est supérieure à la puissance de l'entraînement moyennée dans le temps, et sachant que ladite valeur limite est inférieure à la puissance maximale dudit entraînement, la puissance étant tributaire de l'état de fonctionnement dudit entraînement.

6. Procédé conçu pour faire fonctionner un système d'entraînement notamment conforme à au moins l'une des revendications précédentes,
l'onduleur d'un entraînement étant alimenté à partir d'un circuit intermédiaire alimenté par un convertisseur (3) courant continu/courant continu alimenté à partir d'un convertisseur (4) courant alternatif/courant continu, en particulier d'un redresseur,
ledit onduleur de l'entraînement étant raccordé à une commande connectée audit convertisseur (3) courant continu/courant continu et audit onduleur, notamment en mode direct ou indirect, en vue de la transmission de signaux,
de façon telle que ledit convertisseur (3) courant continu/courant continu délivre, audit circuit intermédiaire, une puissance électrique préétablie par ladite commande,
ledit convertisseur (3) courant continu/courant continu délivrant, audit circuit intermédiaire, un courant par la nature duquel la puissance, injectée dans ledit circuit intermédiaire, est régulée sur une valeur de consigne,
sachant que la tension de circuit intermédiaire est détectée et
∘ comparée à au moins une valeur critique (U0, U1 ou U2),
∘ que, lors d'un dépassement négatif d'une première valeur, une puissance électrique est injectée dans le circuit intermédiaire par le convertisseur (3) courant continu/courant continu, de même que,
∘ lors d'un dépassement positif d'une seconde valeur, de l'énergie est délivrée, à partir dudit circuit intermédiaire, à une résistance en vue de la conversion en chaleur ohmique, ou à un appareil d'alimentation régénérative de réseau, en vue de renvoyer l'énergie dans un réseau de courant alternatif,
∘ que, lors d'un dépassement négatif de ladite seconde valeur et d'un dépassement positif de ladite première valeur, aucune puissance électrique n'est injectée dans ledit circuit intermédiaire par ledit convertisseur (3) courant continu/courant continu.

7. Procédé selon la revendication 6,
**caractérisé par le fait que**
la seconde valeur est supérieure à la première valeur.

8. Procédé selon la revendication 6 ou 7,
**caractérisé par le fait que**
la valeur de consigne est préétablie par une commande de niveau supérieur,
laquelle valeur de consigne est déterminée en mode prédictif, par ladite commande, sur la base du déroulement planifié de la commande.

9. Procédé selon l'une des revendications 6 à 8,
**caractérisé par le fait**
**qu'**une hystérésis est prise en considération lors de la comparaison de la tension de circuit intermédiaire détectée avec la (les) première et/ou seconde valeur(s).

10. Procédé selon l'une des revendications 6 à 9,
**caractérisé par le fait que**
la puissance maximale admissible, injectée et/ou pouvant être injectée dans le circuit intermédiaire par le convertisseur (3) courant continu/courant continu, est supérieure à la puissance moyenne prélevée et/ou pouvant être prélevée par l'entraînement à partir dudit circuit intermédiaire ;
et/ou **par le fait que**
la puissance maximale admissible, injectée et/ou pouvant être injectée dans ledit circuit intermédiaire par ledit convertisseur (3) courant continu/courant continu, est inférieure à la puissance maximale,
sachant notamment que l'élément (2) de stockage d'énergie présente un dimensionnement suffisamment grand.

11. Procédé selon l'une des revendications 6 à 10,
**caractérisé par le fait que**
la commande préétablit à l'adresse du convertisseur (3) courant continu/courant continu, d'une manière dépendant de l'état de fonctionnement de l'entraînement, la valeur affectée à la puissance maximale admissible injectée et/ou pouvant être injectée, dans le circuit intermédiaire, par ledit convertisseur (3) courant continu/courant continu.
